# EUROPEAN PATENT SPECIFICATION

(11) **EP 1 553 011 B1**
(45) Date of publication and mention of the grant of the patent: **26.08.2009**
(21) Application number: 03748524.0
(22) Date of filing: 11.09.2003
(51) Int. Cl.: B62J 9/00, B62J 17/00, B62J 1/12, B62J 6/18

(54) **MOTORCYCLE**
MOTORRAD
MOTOCYCLETTE

(30) Priority: 03.10.2002 JP 2002291575; 11.10.2002 JP 2002299522
(43) Date of publication of application: 13.07.2005
(73) Proprietor: HONDA GIKEN KOGYO KABUSHIKI KAISHA, Minato-ku, Tokyo 107-8556 (JP)
(72) Inventor: PEDONE, Giovanni, Kabushiki Kaisha Honda, Wako-shi, Saitama 351-8555 (JP); GIOVANNETTI, Andrea, Kabushiki Kaisha Honda, Wako-shi, Saitama 351-8555 (JP); FERRARA, Daniele, Kabushiki Kaisha Honda, Wako-shi, Saitama 351-8555 (JP); TORIYAMA, Eiji, Kabushiki Kaisha Honda, Wako-shi, Saitama 351-8555 (JP); KOBAYASHI, Koki, Kabushiki Kaisha Honda, Wako-shi, Saitama 351-8555 (JP); YAMAGUCHI, Ken, Kabushiki Kaisha Honda, Wako-shi, Saitama 351-8555 (JP)
(74) Representative: Intes, Didier Gérard André
(86) International application number: PCT/JP2003/011607
(87) International publication number: WO 2004/031026

(56) References cited:
- JP-A- 01 275 281
- JP-A- 02 081 779
- JP-A- 03 217 384
- JP-A- 05 050 963
- JP-A- 2001 071 961
- JP-U- 63 143 485

## Description

### Technical Field

The present invention relates to motorcycles having a large luggage compartment between a front wheel and a rear wheel.

### Background Art

Certain motorcycles, especially scooters, have a large luggage compartment. Such a motorcycle is disclosed in, for example, Japanese Patent No. 2824257.

The motorcycle disclosed in Japanese Patent No. 2824257 has a large luggage compartment between a front wheel and a rear wheel, and has an opening/closing cover provided between handlebars and a seat. When putting a luggage into the luggage compartment, the opening/closing cover is opened upward and the luggage is put in from above. When taking a luggage out of the luggage compartment, the opening/closing cover is opened upward and the luggage is lifted.

Since the movement of luggage is vertical, it is difficult to put a heavy luggage in and out.

Also, it is required to open the opening/closing cover upward. The larger the luggage compartment is, the larger the opening/closing cover is, resulting in a larger upper space required for the opening and closing.

When the motorcycle in the above publication is put into a garage with the ceiling at a height which is only a few hundred millimeters higher than the maximum height of the motorcycle, or more specifically, the height between the ground and the upper edge of a rearview mirror or the upper edge of a wind-shield, for example, the opening/closing cover cannot be opened in that low-ceilinged garage.

A motorcycle comprising a luggage compartment with both a side and a top closing cover is disclosed in Japanese Patent No. 5050963.

### Disclosure of the Invention

According to a first aspect of the present invention, there is provided a motorcycle which comprises: a body frame with front and rear wheels; a cowling enclosing most part of the body frame; a luggage compartment disposed within the cowling and between the front and rear wheels; and at least one opening/closing cover provided at a side of the cowling for putting a luggage in and out of the luggage compartment from sideways.

Since the movement of luggage is horizontal, even a heavy luggage can be easily put in and out of the luggage compartment. The horizontal movement of luggage allows loading and unloading even in a low-ceilinged garage. The side of the cowling has a larger area than the other portions, so that the opening/closing cover of a large diameter can be attached to the side. The opening/closing cover of a large diameter facilitates putting a large luggage in and out of the luggage compartment.

The cowling has a rear opening communicating with the luggage compartment, the opening being able to be closed by a seat to be occupied by an operator and brought into an opened state by opening the seat.

According to a second aspect of the present invention, there is provided a motorcycle which comprises: low floor portions on which an operator put his legs when riding; a low-floor frame supporting the low floor portions; a luggage compartment provided on the low-floor frame; a side opening provided in a side of the luggage compartment; an opening/closing cover for closing the side opening; a fastening member for fastening a first end of the opening/closing cover to a body component; and a keylock provided at a second end of the opening/closing cover in a location where an operator riding on can hold the cover with his leg, for fastening the second end to the body component. The luggage compartment has a rear opening provided at the rear part thereof, the rear opening is designed such that it can be closed by a seat for an operator to sit on and brougth into an opened state by opening the seat.

The luggage compartment is preferably a member which is fixed at a bottom thereof on the low floor portions, put upright on the low floor portions, and contained in a cowling for supporting the cowling.

In a preferable embodiment, the motorcycle further comprises: a combination switch disposed, in a side view, near an edge of the side opening and in the vicinity of a head pipe; and a harness extended from the combination switch to a rear combination lamp or the like, routed through a space between the cowling and the luggage compartment and/or a cable extended from the combination switch to a seat lock mechanism or the like, routed through a space between the cowling and the luggage compartment.

### Brief Description of Drawings

FIG. 1 is a left side view of a motorcycle according to the present invention, when viewed from the left;
FIG. 2 is a cross-sectional view along line 2-2 of FIG. 1;
FIG. 3 is an internal structural diagram of the motorcycle according to the present invention, showing a body frame, luggage compartment and so on;
FIG. 4 is an explanatory diagram of putting out small packs;
FIG. 5 is a front view of the motorcycle according to the present invention;
FIG. 6 is a view taken from left above of the motorcycle according to the present invention;
FIG. 7 is a view of a meter indicator taken from an operator;
FIG. 8 is a left side view of a front wheel;
FIG. 9 is a rear view of the motorcycle according to the present invention;
FIG. 10 is a right side view of a rear wheel;
FIG. 11 is a left side view of the rear wheel;
FIG. 12 is a diagram illustrating the connection between a power unit and a pivot shaft;
FIG. 13 is a cross-sectional view along line 13-13 of FIG. 12;
FIG. 14 is a left side view of a motorcycle according to a second embodiment of the present invention;
FIG. 15 is a longitudinal cross-sectional view of FIG. 14;
FIG. 16 is a transverse cross-sectional view of the major part of FIG. 14;
FIG. 17 is a cross-sectional view along line 17-17 of FIG. 14;
FIG. 18 is a route diagram of harnesses and a cable according to the present invention;
FIG. 19 is a left perspective view of the second embodiment of the present invention;
FIG. 20 is a rear perspective view of the second embodiment of the present invention;
FIG. 21 is a view taken in the direction of arrow 21 in FIG. 14; and
FIG. 22 is an exploded diagram of a front fender of the motorcycle according to the second embodiment of the present invention.

### Best Mode for Carrying Out the Invention

In the description below, left, right, front and rear indicate directions from an operator riding on.

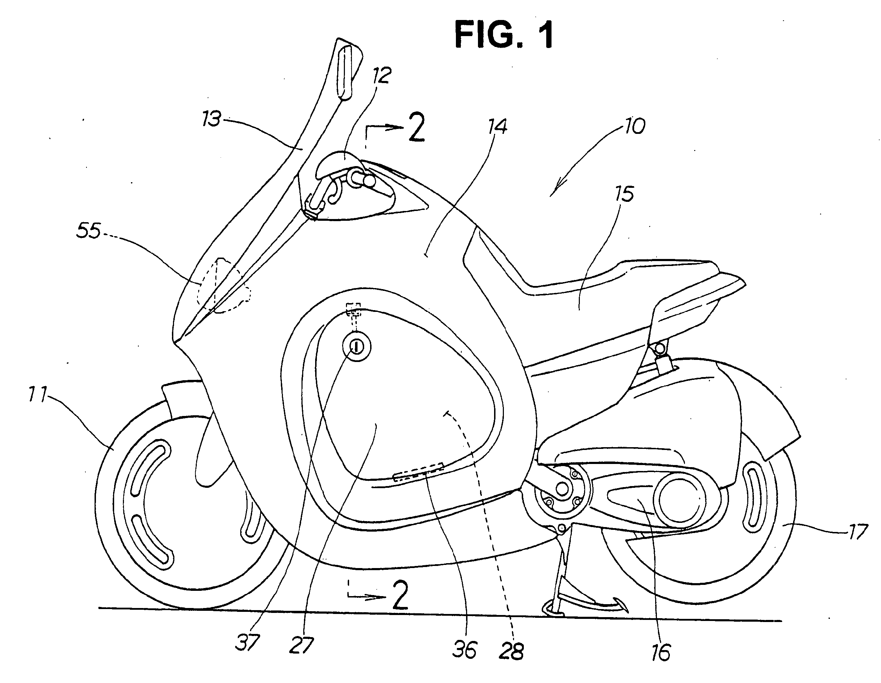

To begin with, as shown in FIG. 1, a motorcycle 10 is a vehicle basically composed of a front wheel 11, handlebars 12 for turning the front wheel 11 left and right, a windshield 13 covering the front of the handlebars 12, a cowling 14 extending rearward from the windshield 13, constituting the exterior of the vehicle, a seat 15 extended from the rear end of the cowling 14, a power unit 16 disposed below the seat 15, and a rear wheel 17 driven by the power unit 16.

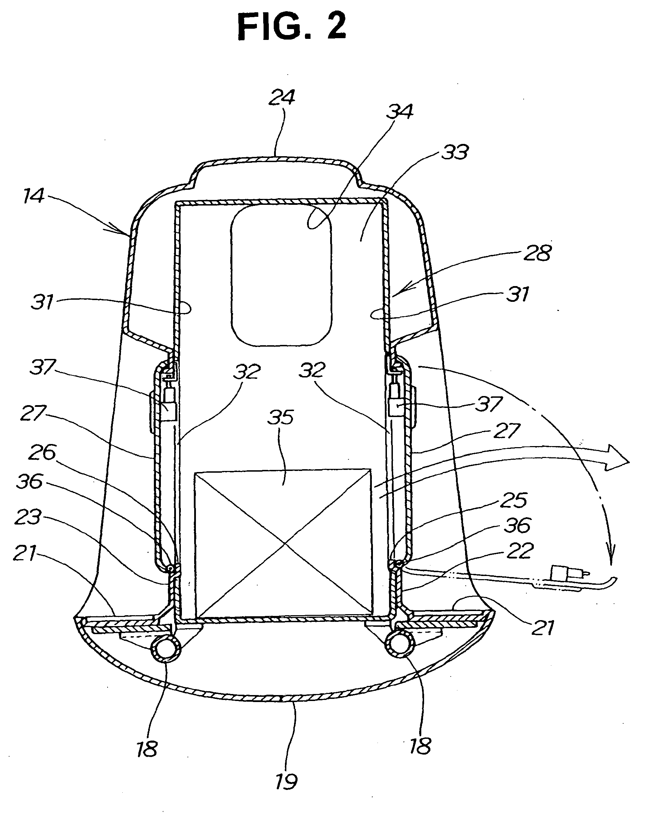

The cowling 14 will be described with reference to FIG. 2, which is a cross-sectional view along line 2-2 of FIG. 1.

Referring to FIG. 2, the cowling 14 consists of an under cover 19 enclosing from below a pair of left and right horizontal members 18, 18 extended across the two sides of the figure sheet, left and right steps 21, 21 placed on the horizontal members 18, 18, left and right sidewalls 22, 23 as side surfaces raised from the inner edges of the left and right steps 21, 21, and a top cover 24 connecting the top ends of the sidewalls 22, 23. The cowling 14 is divided into left and right two portions or more portions in view of assemblage.

Large side openings 25, 26 are formed in the sidewalls 22, 23. The side openings 25, 26 are closed by opening/closing covers 27, 27.

A large luggage compartment 28 is disposed in the cowling 14. The bottom of the luggage compartment 28 is supported on the horizontal members 18, 18. Left and right walls 31, 31 of the luggage compartment 28 are formed with openings 32, 32, and a back wall 33 is formed with a relatively small rear opening 34.

With this structure, a large pack 35 stored in the luggage compartment 28 can be put out through the side openings 32 and 25 with one of the opening/closing covers 27 opened as shown by imaginary lines.

Each opening/closing cover 27 has at its lower edge a hinge 36 as a fastening member and at its upper edge a keylock 37, and can be opened from an upright state to a substantially horizontal state about the hinge 36 by unfastening the keylock 37.

It is general to provide a total of two opening/closing covers 27 to the left and right of the cowling 14. It is, however, allowable to provide only one for the reason that it is required to reduce production costs or the like.

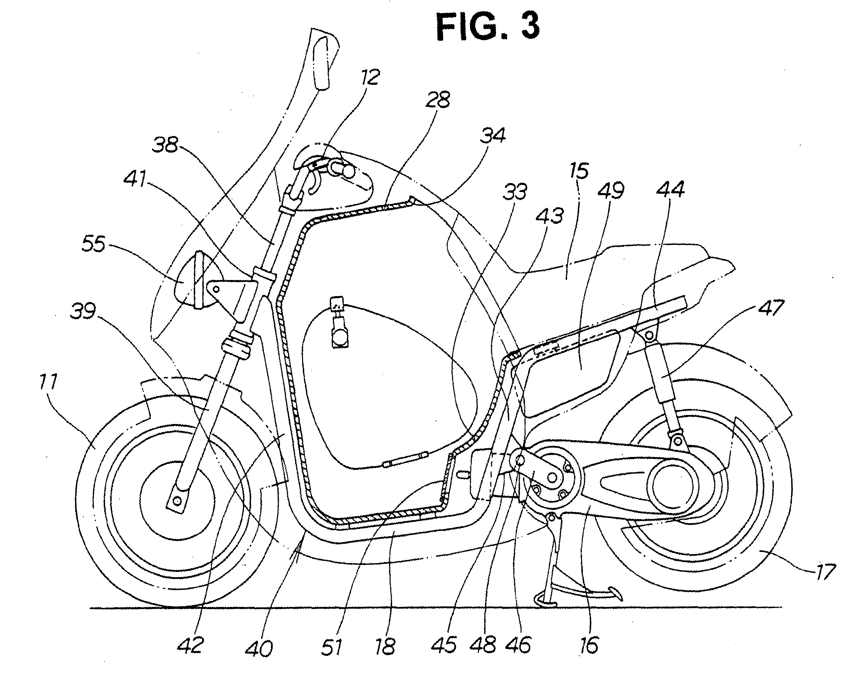

Now, the internal structure of the vehicle will be described with FIG. 3 at a different angle from FIG. 2.

As shown in FIG. 3, the handlebars 12 are connected to the front wheel 11 via a steering shaft 38 and a front fork 39.

A body frame 40 has a tubular structure consisting of a head tube 41 fitted onto the steering shaft 38, down members 42 extended downward from the head pipe 41, the horizontal members 18 extended rearward from the lower ends of the down members 42, rear members 43 raised obliquely rearward and upward from the horizontal members 18, and seat rails 44 extended rearward from the upper ends of the rear members 43.

A bracket 45 is extended from the rear member 43, and a pivot link 46 is attached to the bracket 45. The power unit 16 is attached to the pivot link 46, and a rear shock absorber 47 hung from the seat rail 44 is connected to the rear of the power unit 16. The power unit 16 is resultantly connected to the body frame 40 in such a manner as to be able to swing vertically about the pivot shaft 48. A fuel tank 49 can be disposed in a space between the power unit 16 and the seat rails 44.

The luggage compartment 28 is a box placed in a space enclosed by the steering shaft 38, down members 42, horizontal members 18, rear members 43 and the front of the seat 15. It is preferable to provide an opening and closing lid 51 at a lower portion of the back wall 33 for inspection of a plug.

The function of the rear opening 34 provided in the back wall 33 will now be described.

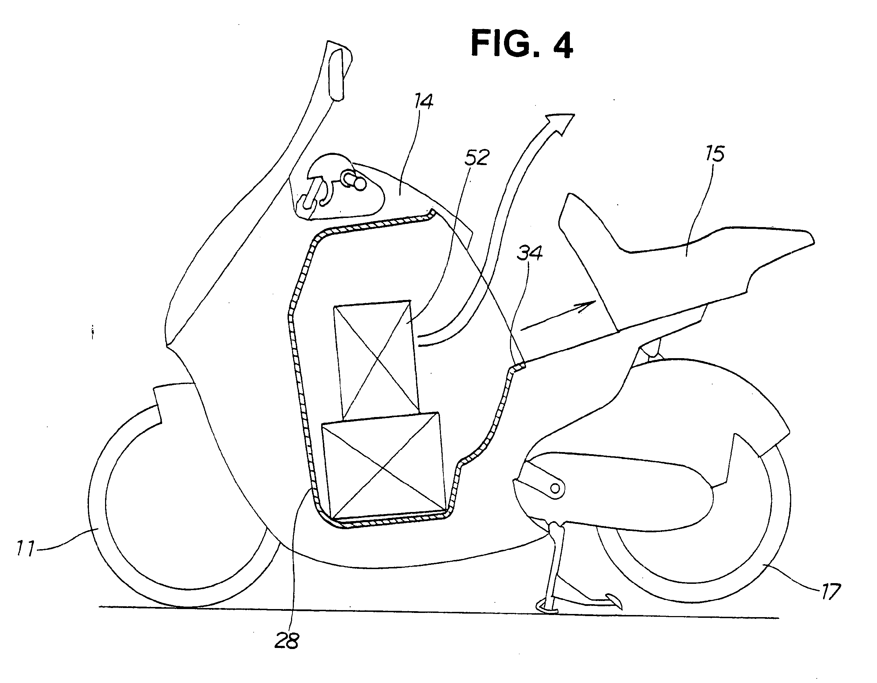

As shown in FIG. 4, the seat 15 can be slid rearward or rightward in the figure, thereby to largely open the rear opening 34. Through the rear opening 34, a small pack 52 can be taken out.

As is clear from FIGS. 2 and 4, the luggage compartment 28 is provided with the three openings 32, 32 and 34, so that a luggage can be put in and out through either opening 32 or the opening 34 selected by an operator at will. When the motorcycle 10 of the present invention is parked very close to a building or an obstacle on the road, one of the pair of left and right opening/closing covers 27, 27 cannot be opened and closed, but the other can be opened and closed freely.

The pair of left and right opening/closing covers 27, 27 constitutes part of the walls of the luggage compartment 28. When more than a certain quantity of luggage is stored, it is desirable to put a luggage out through the rear opening 34 without opening the opening/closing covers 27, 27.

As described above, according to the present invention, a luggage compartment becomes very convenient.

Now, other features than the luggage compartment 28 will be described.

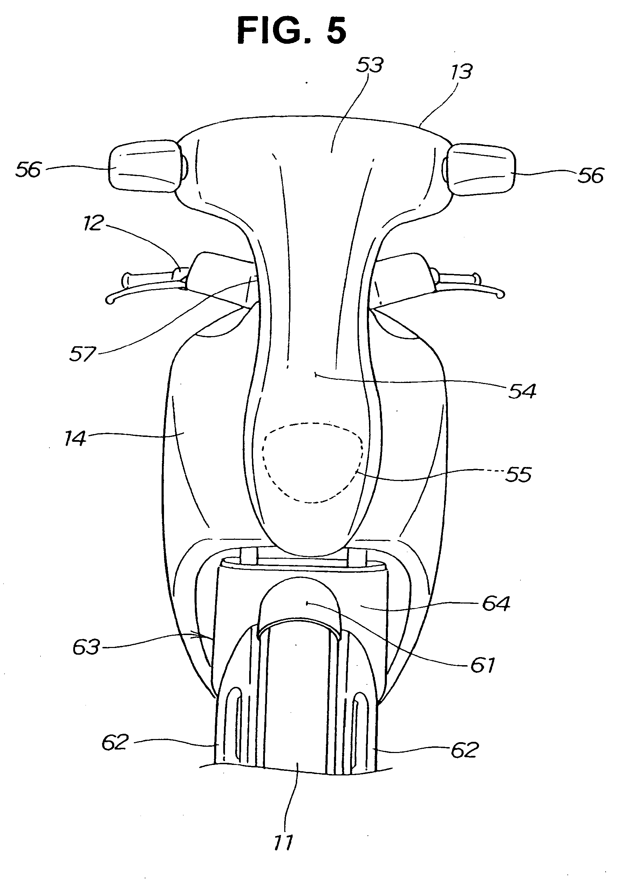

A first feature is that, as shown in FIG. 5, the windshield 13 is in a T shape when viewed from the front. Specifically, the windshield 13 is composed of a transverse bar portion 53 extending left and right and a vertical bar portion 54 extending downward from the middle of the transverse bar portion 53. The vertical bar portion 54 is extended downward to the extent that it can cover a headlamp 55.

In conventional motorcycles, a windshield is separated from a headlamp, and the headlamp is visible. Therefore, in conventional motorcycles, both a windshield and a headlamp must have elaborate designs. By contrast, the windshield 13 in FIG. 5 can be a colored windshield to conceal the headlamp 55, so that no elaborate headlamp design is required. An improved design of the windshield 13 can result in an improved front design of the motorcycle.

The transverse bar portion 53 agrees with the eye level of an operator. If the face or head of the operator is swung sideways, the face or head hardly comes out of the transverse bar portion 53 elongated laterally. Rearview mirrors 56, 56 can be attached to the left and right of the transverse bar portion 53.

For a further improved design, it is desirable to constrict an upper portion of the vertical bar portion 54. The constriction 57 serves as a handlebar receiving portion for providing or increasing the turning angle of the handlebars 12.

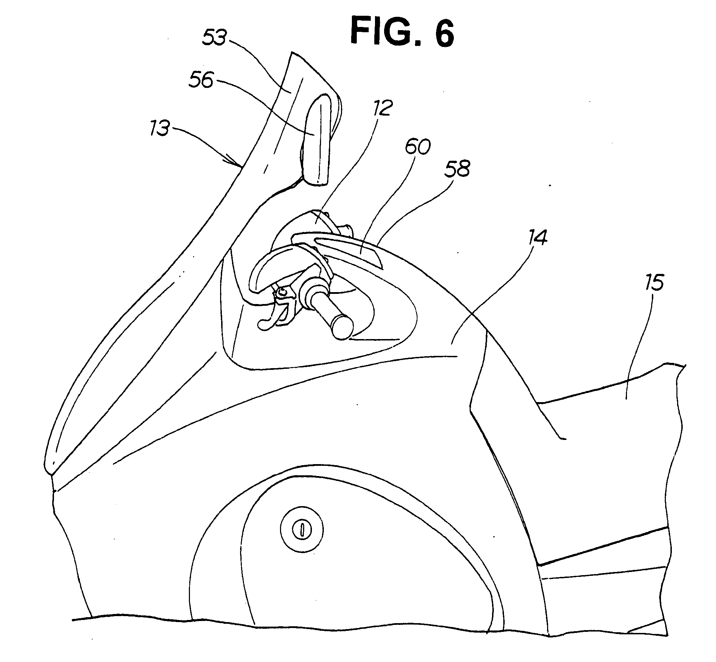

As a result, as shown in FIG. 6, the transverse bar portion 53 of the windshield 13 can be made close to the seat 15, hanging over the handlebars 12. As a result, the windshield 13 comes close to an operator, achieving more effective windshield functions.

Another feature is that an upper portion of the cowling 14 is overhung beyond the handlebars 12, and a meter indicator 60 is provided in the overhang portion 58.

In conventional motorcycles, a meter indicator 60 is disposed on a fuel tank or handlebars, or in front of handlebars. When it is disposed on a fuel tank, an operator must look down to a degree, feeling some inconvenience. When it is disposed on handlebars, the handlebars become a little heavy. When disposed in front of handlebars, a meter indicator is at a distance, somewhat affecting visibility.

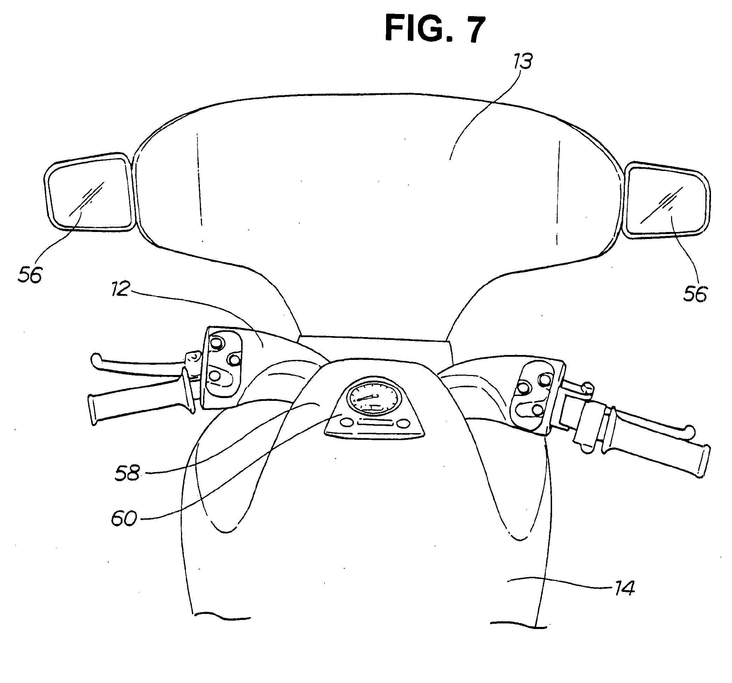

In this regard, in FIG. 6, the meter indicator 60 is disposed outside the handlebars 12, avoiding making the handlebars 12 heavy. In addition, as shown in FIG. 7, the meter indicator 60 is disposed above the handlebars 12, thus being able to be disposed at a preferable distance from an operator, providing better visibility.

Returning to FIG. 5, illustrated is still another feature that the front wheel 11 is covered not only by a front fender 61 but also by left and right wheel side covers 62, 62. A front fender/side cover assembly 63 for that purpose may be a resin molded part in which the front fender 61 and the wheel side covers 62, 62 are integrated with a bridge 64.

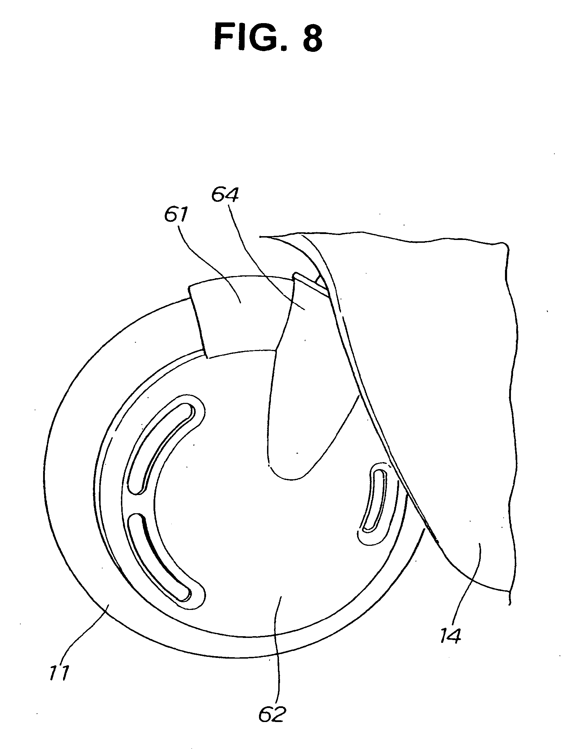

As shown in FIG. 8, the wheel side cover 62 covers the side of the front wheel 11 to a large extent. The covering has the effects of limiting the entering of muddy water into a wheel of the front wheel 11, and preventing dirt on the wheel of the front wheel 11. In addition, as is clear from FIG. 5, wind can be blocked from getting into an axle of the front wheel 11, resulting in a straitened flow of running wind around the front wheel 11.

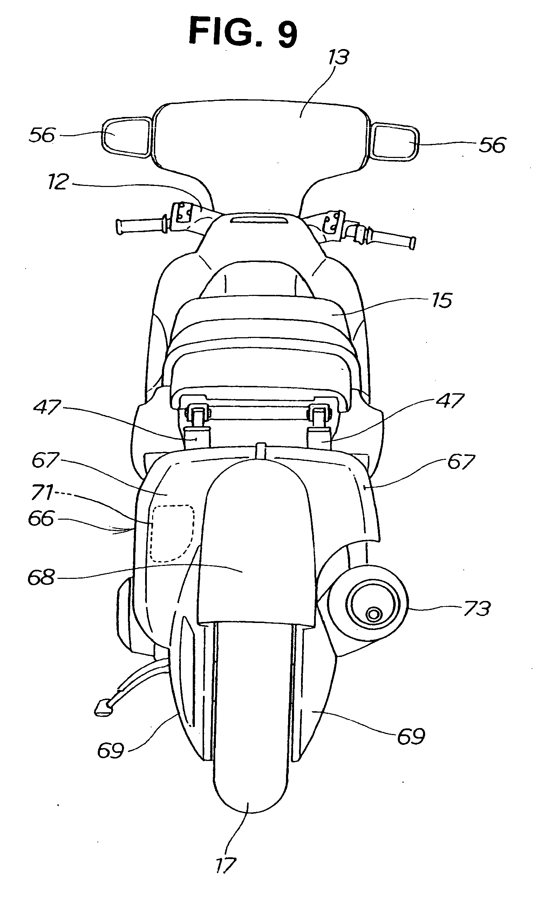

The rear wheel 17 is also covered by a rear fender/side cover assembly 66 shown in FIG. 9. The rear fender/side cover assembly 66 is a resin molded part in which a rear fender 68 and left and right wheel side covers 69, 69 for covering the sides of the rear wheel are integrated with sufficiently large left and right rear covers 67, 67. The left rear cover 67 covers an air cleaner 71.

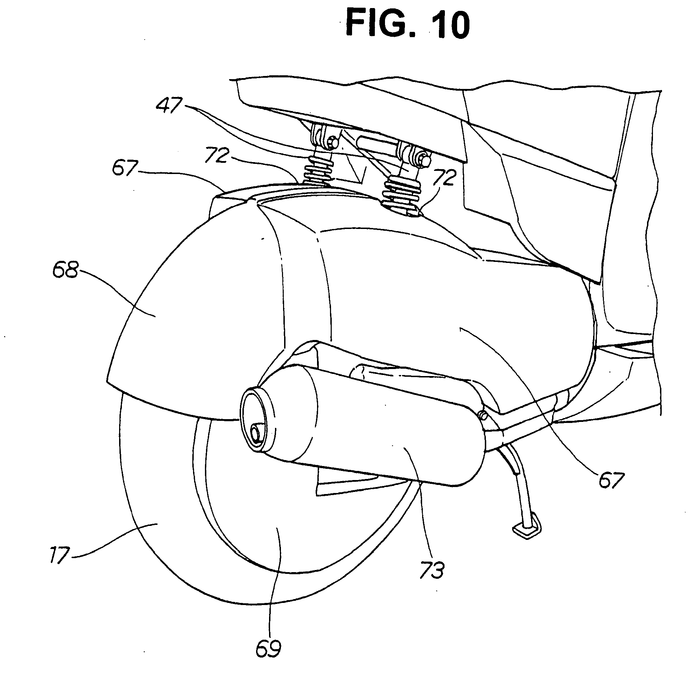

As shown in FIG. 10, the left and right rear covers 67, 67 have holes 72, 72 through which rear shock absorbers 47, 47 extend. As a result, the left and right rear covers 67, 67 can be sufficiently wide. The right rear cover 67 is extended close to a muffler 73, thereby to be able to effectively cover a right side portion of the rear wheel 17.

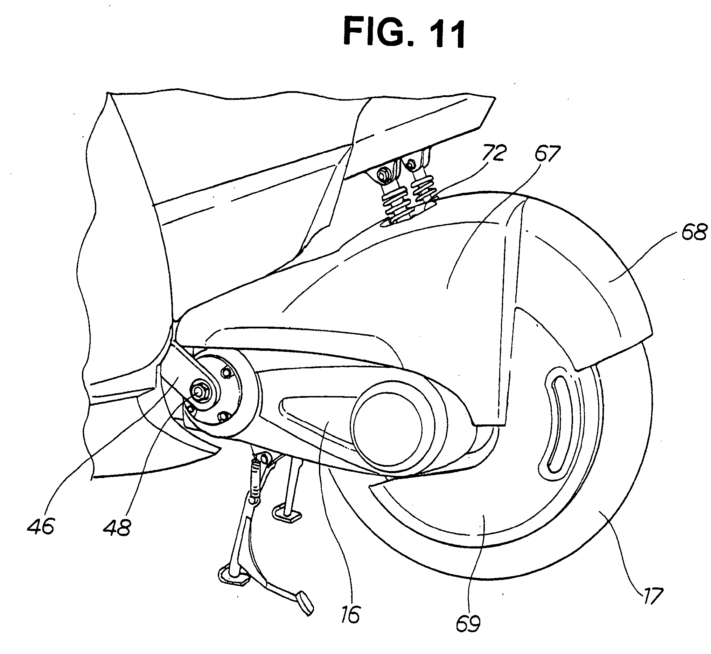

As for the left of the rear wheel 17, as shown in FIG. 11, the left rear cover 67 is extended close to the power unit 16, thereby to effectively cover a left side portion of the rear wheel 17.

Covering the rear wheel 17 with the rear fender/side cover assembly 66 provides a sleek-looking appearance from the power unit 16 to the rear wheel 17 as a whole, preventing entering of murky water into a wheel of the rear wheel 17, and avoiding dirt on the wheel of the rear wheel 17. In addition, entering of wind into an axle of the rear wheel 17 can be prevented, resulting in a straitened flow of running wind around the rear wheel 17.

Connection between the power unit 16 formed along a lower edge of the left rear cover 67 and the pivot shaft 48 will be described below.

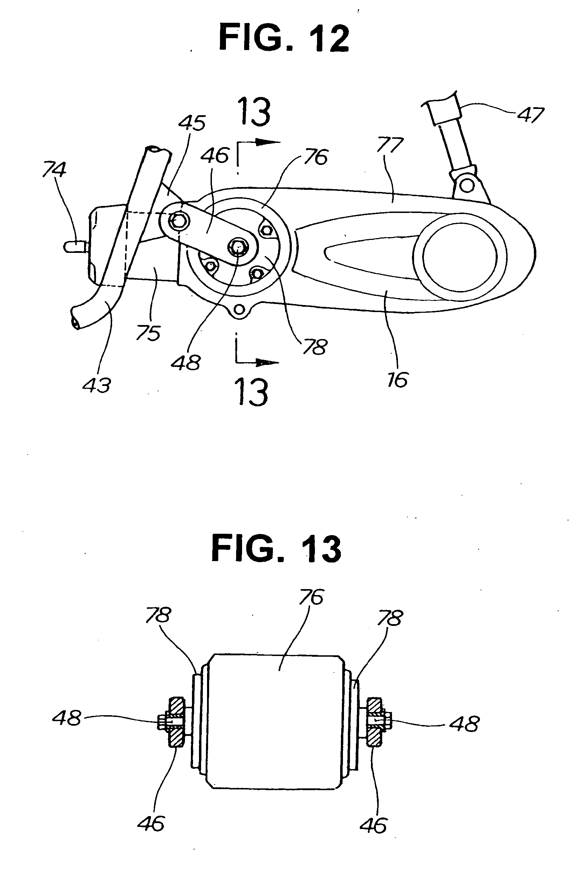

As shown in FIG. 12, the power unit 16 includes a cylinder 75 with a sparking plug 74, a crankcase 76 continuing from the cylinder 75, and a transmission case 77 extended rearward from the crankcase 76. The cylinder 75 is relatively heavy and the transmission case 77 is relatively light, so that the center of gravity of the power unit 16 is located at substantially the center of a crank cover 78. Therefore, as shown in FIG. 13, the pivot shafts 48 are integrally extended from the crank covers 78, and the pivot links 46 are connected to the pivot shafts 48.

Many conventional power units adopt a structure in which a hole is formed in an upper edge of a crankcase or an upper edge of a transmission case, and a pivot shaft is put through the hole. This conventional structure facilitates mounting of a power unit to a body frame, but is somewhat disadvantageous in preventing vibration.

The power unit 16 can be called a vibrating body because it includes a reciprocal engine. Overall vibratory force can act on the center of gravity of the power unit 16 in vertical, longitudinal, and other directions. When there is a distance between the center of the pivot shaft and the center of gravity of the power unit, moment obtained by multiplying the distance by the vibratory force can occur, acting on the rear shock absorber 47, and affecting the vibration of the vehicle body.

However, when the center of gravity of the power unit 16 shown in FIG. 12 agrees with the center of the pivot shaft 48, no moments occur, having good influence on the vibration of the vehicle body. The structure shown in FIGS. 12 and 13 is thus effective in improving riding comfort of the motorcycle.

Now another embodiment of the present invention will be described.

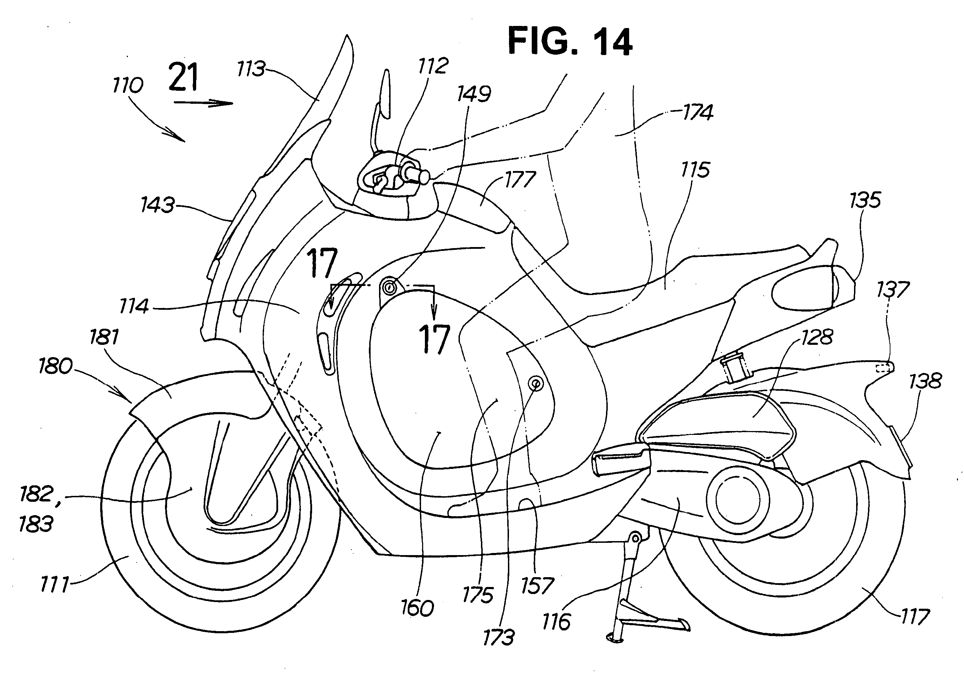

As shown in FIG. 14, a motorcycle 110 is a vehicle basically composed of a front wheel 111, handlebars 112 for turning the front wheel 111 left and right, a windshield 113 covering the front of the handlebars 112, a cowling 114 extending rearward from the windshield 113, constituting the exterior of the vehicle, a seat 115 disposed on the cowling 114, a power unit 116 disposed below the seat 115, and a rear wheel 117 driven by the power unit 116.

Details of the structure of a front fender 180 covering the front wheel 111 and the shape of the windshield 113 will be described below.

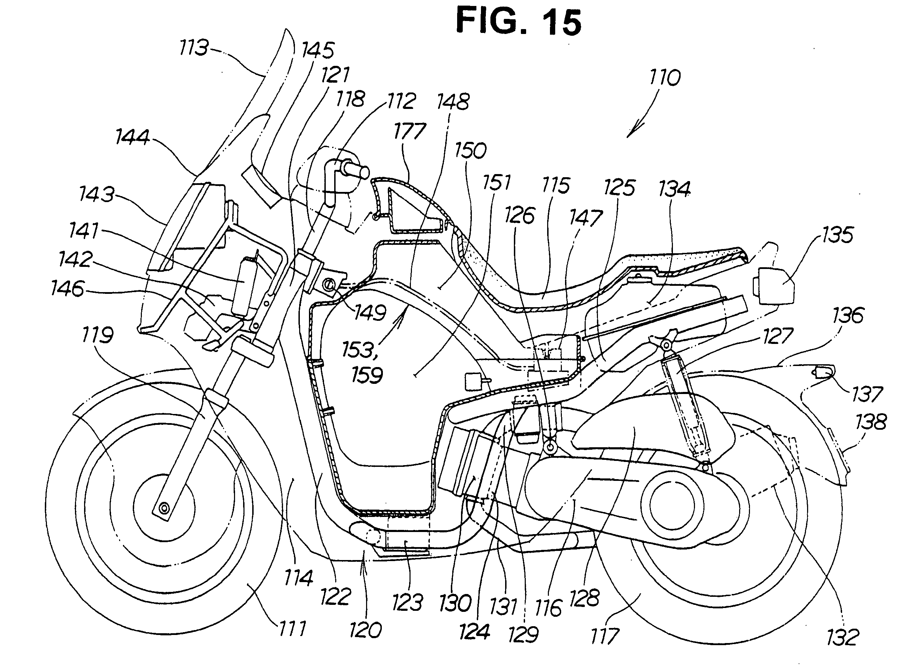

As shown in FIG. 15, the handlebars 112 are connected to the front wheel 111 via a steering shaft 118 and a front fork 119.

A body frame 120 has a tube/plate composite structure consisting of a head tube 121 fitted onto the steering shaft 118, down members 122 extended downward from the head pipe 121, horizontal members 123 extended rearward from the lower ends of the down members 122, rear members 124 raised obliquely rearward and upward from the horizontal members 123, and seat rails 125 extended rearward from the upper ends of the rear members 124.

The body frame 120 is referred to as a "low-floor frame structure" because it has a U shape in a side view with the horizontal members 123 at the bottom supporting footrests.

A power unit 116 is mounted to the rear members 124 via pivot shafts 126 in a vertically swingable manner. Rear shock absorbers 127 hung from the seat rails 125 are connected to the rear of the power unit 116. An air cleaner 128 is disposed in front of the rear shock absorber 127 in the figure and above the power unit 116. Air cleaned by the air cleaner 128 is carried through an air supply pipe 129 to a cylinder 130. An exhaust gas generated in the cylinder 130 is discharged through an exhaust pipe 131 and released into the atmosphere through a muffler 132 behind the rear wheel 117. In this embodiment, unlike the previous embodiment, a four-stroke engine is mounted.

A fuel tank 134 storing fuel to be delivered to the cylinder 130 is disposed immediately below the seat 115 and between the seat rails 125. The fuel tank 134 can be moved to the horizontal members 123.

By doing so, a storage space can also be provided below the seat 115. If the space is connected to a luggage compartment in front, a long object can be stored.

A rear combination lamp 135 is disposed rearward of the seat rails 125. A license-plate lamp 137 is provided in an upper portion of a rear fender 136 which is disposed obliquely below the rear combination lamp 135. The license-plate lamp 137 illuminates a license plate 138 provided on the rear fender 136. The rear combination lamp 135 has a lamp structure in which a tail lamp is integrated with a brake lamp.

In front of the head tube 121, a radiator 141 for the water-cooled engine and a controller (regulator) 142 are disposed. In front of them, a headlamp 143 is disposed. The headlamp 143 is not mounted to the body frame but to a front cover 144 constituting a front portion of the cowling 114.

A meter 145 including a speedometer and a tachometer is placed between the front cover 144 and the handlebars 112, which makes it difficult to change a bulb of the headlamp 143 or adjust the light axis.

Therefore, in this embodiment, the front cover 144 is designed to be able to open forward. A bracket 146 is extended from the head tube 121 to rotatably support the lower edge of the front cover 144 on the bracket 146.

In the figure, reference numeral 147 denotes a seat catcher, 148 a seat lock release wire, and 149 a combination switch. The combination switch 149 is a multifunctional switch serving as an electric switch for switching on/off the engine and as a handlebar lock. It is also used to pull the seat lock release wire 148 to release the seat catcher 147, thereby to allow the seat 115 to be opened.

Now, a luggage compartment as one of the features of the present invention will be described.

Employing the above-described low-floor frame structure, the body frame 120 has a substantially U shape in a side view. Along the body frame 120 like that, a luggage compartment 150 of a very large capacity can be disposed.

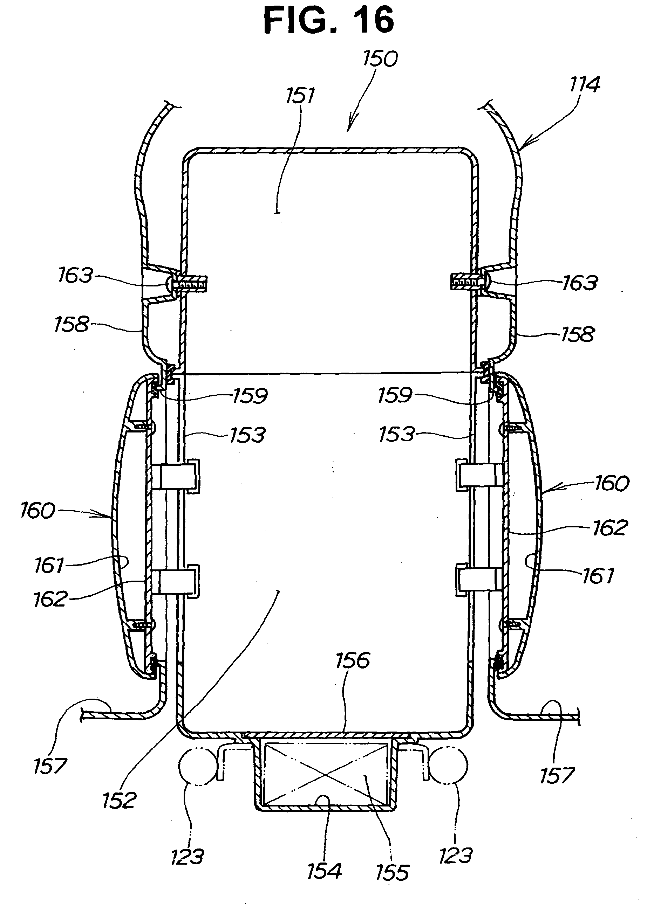

As shown in FIG. 16, the luggage compartment 150 is divided into upper and lower parts, an upper box half 151 and a lower box half 152, because of drawing after resin molding, which are connected and united into a box with a plurality of bolts. The box itself constitutes a strengthening member.

The lower box half 152 is formed with side openings 153, 153, and is expanded downward at the bottom to form a battery housing 154. By opening a lid 156, the battery 155 can be put in and out.

The luggage compartment 150 of this structure is placed on low floor portions of the body frame, that is, the horizontal members 123, 123. The luggage compartment 150 standing on the horizontal members 123, 123 is enclosed with the cowling 114.

At that time, walls 158, 158 are put upright from steps 157, 157 as footrests. The walls 158, 158 are formed with side openings 159, 159. The side openings 159, 159 are closed by opening/closing covers 160, 160, respectively.

Each opening/closing cover 160 has a hollow body with an exterior member 161 screwed to an interior member 162, having a structure of high flexural rigidity.

As is clear from the figure, in the cross-section of the major part, only the left and right two horizontal members 123, 123 are located, and a body frame part for supporting the cowling 114 is absent. To compensate for this, the present invention effectively utilizes the luggage compartment 150 as a strengthening member. Specifically, the cowling 114 is fixed to the upper box half 151, 151 with screws 163, 163, compensating for the absence of the body frame part.

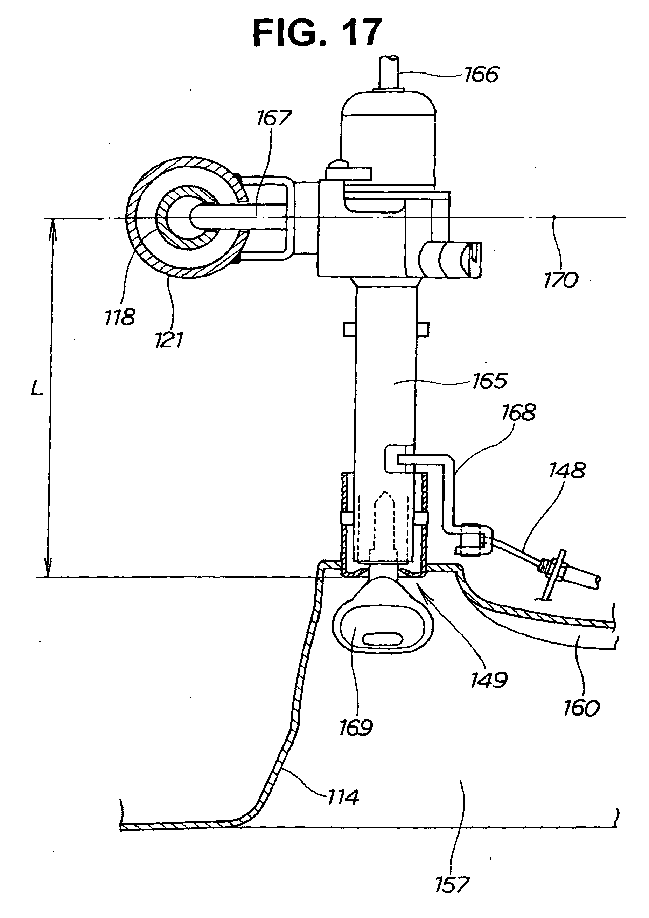

As shown in FIG. 17, the combination switch 149 is a multifunctional switch serving as an electric switch for switching on/off the engine, a mechanical switch for locking/unlocking the handlebars, and a mechanical switch for pulling the seat lock release wire 148. In other words, the combination switch 149 is a switch for electrically or mechanically operating a harness 166 extended from a switch body 165, a handlebar lock pin 167 and a wire control lever 168. More specifically, when a main key 169 is turned, it can provide electrical control via the harness 166, put the handlebar lock pin 167 in and out of the steering shaft 118 to make the handlebars locked/unlocked, and pull the seat lock release wire 148 to release the seat lock.

What is important here is that, in FIG. 15, the combination switch 149 is disposed near the edge of the side opening 159 and in the vicinity of the head tube 121.

Returning to FIG. 17, it is necessary for the cowling 141 to be hollowed above the step 157 and to support the edge of the opening/closing cover 160. Thus, it is necessary to form the edge of the side opening closer to the vehicle center 170. The combination switch 149 is provided in that location, so that the total length L of the combination switch 149 can be sufficiently small.

The switch body 165 is a cantilever, and bending moment and bending stress proportional to the length occur at its proximal portion. Against large bending moment, it is necessary to provide a large diameter to at least the proximal portion of the switch body 165, but yet unfavorable bending acts on the head tube 121.

In this respect, the switch body 165 with a sufficient shortness reduces bending moment, allowing the switch body 165 to be smaller and the head tube 121 to be thinner.

In most motorcycles, a combination switch is exposed, and it is necessary for a combination switch to have a completely watertight structure, resulting in an increased combination switch cost.

In this regard, as shown in FIG. 14, the combination switch 149 is located in a recessed place and a bulging portion of the cowling 141 serves as a roof, providing easy water prevention measures. That is, the water tightness can be loosened, and the cost of the combination switch 149 can be reduced.

Now, the layout of harnesses and cables will be described.

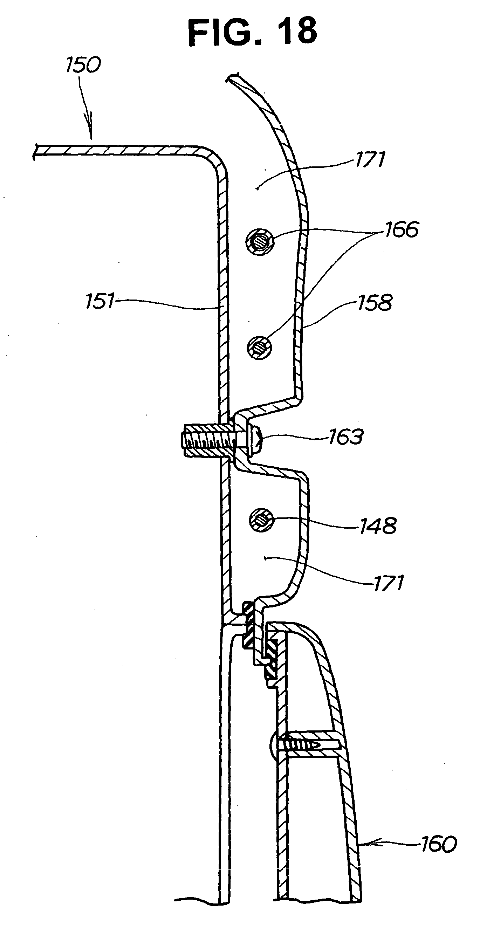

In this invention, as shown in FIG. 18, when the cowling wall 158 is fastened to the luggage compartment 150 as a strengthening member with the screw 163, spaces 171, 171 are provided between the wall 158 and the upper box half 151. Through the spaces 171, 171, harnesses 166, 166 and a cable 148 are routed.

The functions of the motorcycle 110 of the above structure will now be described.

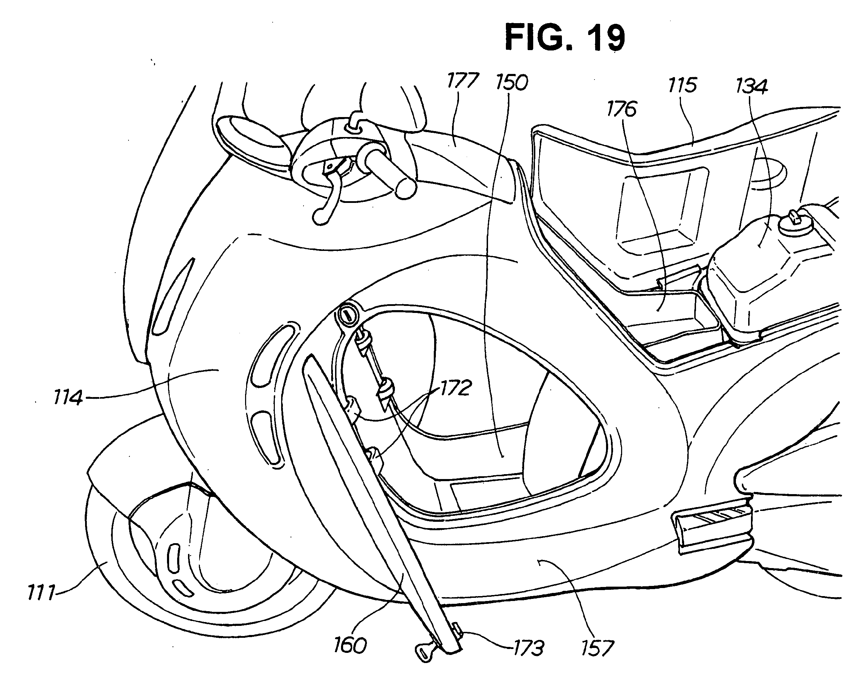

As shown in FIG. 19, the opening/closing cover 160 is mounted, at its front edge, to a body component (cowling 114, luggage compartment 150 or a bracket extended from the body frame) via hinges 172, 172 as fastening members, and has a keylock 173 at its rear end.

Referring to FIG. 14, the vicinity of the keylock 173 can be held by a leg 175 of an operator 174 shown in imaginary lines.

The keylock 173 can be disengaged for some reason. At that time, as shown in FIG. 19, the opening/closing cover 160 can open around the hinges 172, 172. It is preferable to be able to hold down the opening/closing cover 160 in that state by the knee of the operator so as to limit the opening of the opening/closing cover 160.

Thus, according to the prevent invention, a motorcycle having a low-floor frame structure, being provided with a luggage compartment on low floor portions thereof is **characterized in that** the luggage compartment is provided with a side opening in the side, the side opening is closed by an opening/closing cover, the opening/closing cover 160 is fixed at one end to a body component, the other end of the opening/closing cover can be fastened to a body component by a keylock 173, and the both ends of the opening/closing cover are located such that the keylock 173 of the opening/closing cover is located in the vicinity of a portion which an operator riding on can hold with his leg.

The opening/closing cover 160 can be provided at one end with a tongue so that the end can be fastened by inserting the tongue into a body component. In that case, the opening/closing cover 160 is removable from the body component.

Referring to FIG. 14, when imagining the form without the opening/closing covers 160, an opening of the size of the opening/closing cover 160 in a side view is formed, through which the other side can be seen. Thus, a fantastic form of the vehicle can be provided.

For this purpose, the structure of fastening one end of the opening/closing cover 160 to a body component may be of any kind as long as it is a fastening member. That is, the fastening structure to the body component is not limited to the hinges 172.

Referring to FIG. 19, the seat 115 can be opened to supply oil to the fuel tank 134, and to open a rear opening 176 of the luggage compartment 150. That is, the rear opening 176 has been closed by the front of the seat 115.

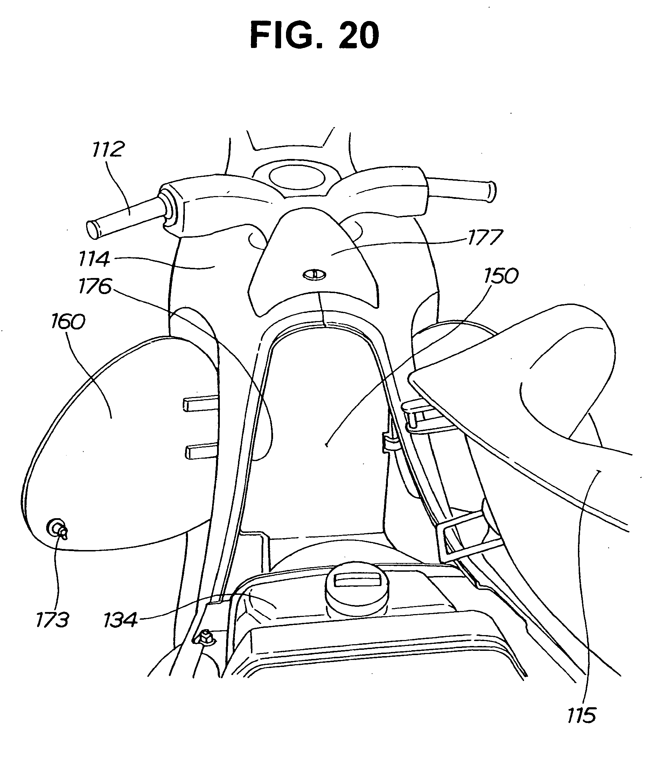

As shown in FIG. 20, through the rear opening 176, a luggage can be put in and out of the luggage compartment 150.

When the luggage is a small luggage such as a helmet, the rear opening 176 is used. When the luggage is a large luggage, the opening/closing cover 160 is used. Thus, the form of use is varied.

It is desirable to put a detachable inner cover onto the rear opening 176. The provision of the inner cover can prevent the inside of the luggage compartment from being seen when supplying oil.

Very small luggage such as a cellular phone and smoking supplies can be stored in by opening a small cover 177 provided at the cowling 114 at the front of the handlebars 112.

Now, the shape of the windshield will be described.

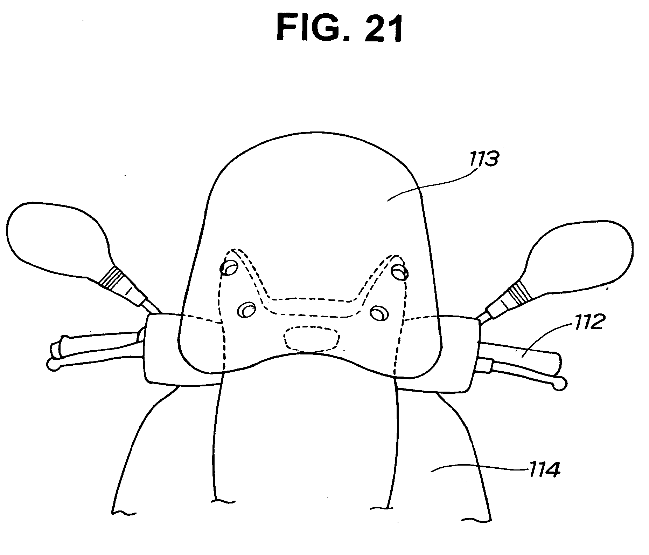

As shown in FIG. 21, the windshield 113 has a substantially trapezoidal shape with the lower edge wider than the upper edge in a front view.

Now the structure of the front fender will be described.

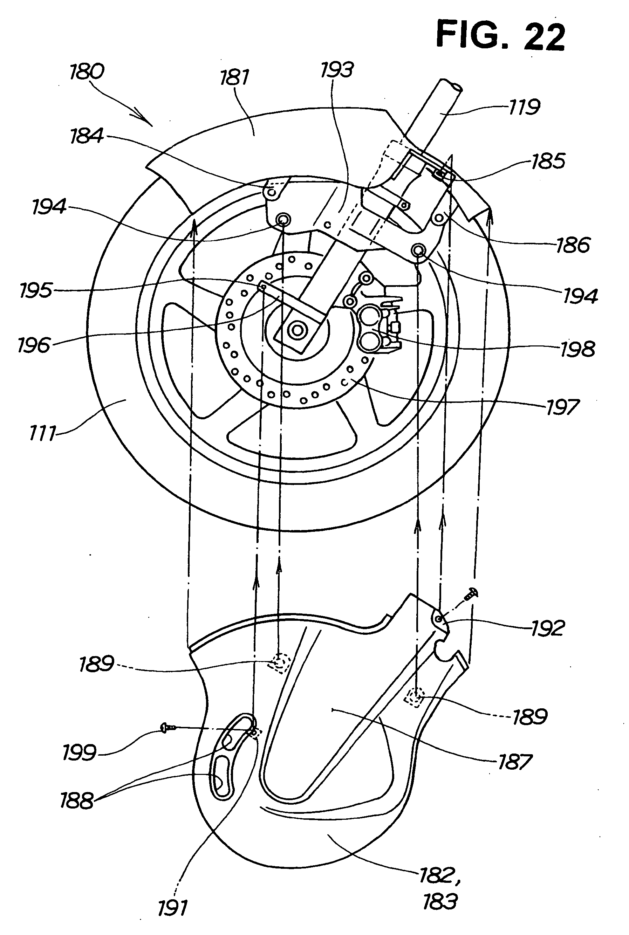

As shown in FIG. 22, the front fender 180 consists of three pieces, a center portion 181 put over the top of the front wheel 111, and a pair of side portions 182, 183 combined with the center portion 181 (the side portion 182 is disposed at the front of the front wheel 111, and the side portion 183 is disposed at the back of the front wheel 111). The center portion 181 has small parts 184, 185 and 186 having bolt holes.

The side portion 182 has a bulging portion 187 for housing a lower portion of the front fork 119, through holes 188, 188 for taking air in, hooks 189, 189 projecting toward the back of the figure sheet, and small parts 191, 192 having bolt holes. The side portion 183 is the same.

A longitudinally-extending fender support bracket 193 is provided at a lower portion of the front fork 119. The fender support bracket 193 is provided with hook insertion holes 194, 194. A fender stay 196 having a bolt hole 195 is provided at the front fork 119 at a location lower than the fender support bracket 193.

First, the center portion 181 can be mounted by bolting the small part 184 and the small part 186 to the fender support bracket 193.

The side portions 182, 183 serve as covers for covering a brake disc 197 attached to the front wheel 111 and a caliper 198 attached to a lower portion of the front fork 119.

As for the side portion 182, the hooks 189, 189 are fitted into the hook insertion holes 194, 194, and then a screw 199 is inserted through the upper through hole 188 to connect the small part 191 to the fender stay 196 with the screw 199. In addition, the small part 192 of the side portion 182 and the small part 185 of the center portion 181 are fastened together. The same is true for the side portion 183.

In this manner, the mounting of the front fender 180 consisting of the side portions 182, 183 covering the opposite sides of the front wheel 111 and the center portion 181 covering the wheel 111 from above is completed. The completed form is as shown in FIG. 14.

The luggage compartment and the opening/closing covers according to the present invention are suitable for scooters, but not limited to scooters. They can be widely applied to motorcycles.

### Industrial Applicability

A luggage compartment and an opening/closing cover according to the present invention allow loading and unloading from the side, increasing the convenience of motorcycles including scooters, and being useful for the production of motorcycles.

## Claims

1. A motorcycle comprising:
a body frame (40) with front and rear wheels (11, 17);
a cowling (14) covering most part of the body frame;
a luggage compartment (28) disposed within the cowling between the front and rear wheels; and
at least one opening/closing cover (27) provided at a side of the cowling for putting a luggage (35) in and out of the luggage compartment from the side,
**characterized in that** the luggage compartment has a rear opening (34) provided at a rear part thereof, the rear opening being designed such that it can be closed by a seat (15) for an operator (174) to sit on and brought into an opened state by opening the seat.

2. A motorcycle comprising:
low floor portions (157) for allowing an operator (174) to rest his legs thereon when riding the motorcycle;
a low-floor frame (120) for supporting the low floor portions;
a luggage compartment (150) provided on the low-floor frame;
a side opening (159) provided at a side of the luggage compartment;
an opening/closing cover (160) for closing the side opening;
a fastening member (172) for fastening a first end of the opening/closing cover to a body component (114); and
a keylock (173) provided at a second end of the opening/closing cover at a location where an operator riding the motorcycle can hold the cover with his leg (175), for fastening the second end to the body component,
**characterized in that** the luggage compartment has a rear opening (176) provided at the rear part thereof, the rear opening is designed such that it can be closed by a seat (115) for an operator (174) to sit on and brought into an opened state by opening the seat.

3. A motorcycle as set forth in claim 2, wherein the luggage compartment (150) is fixed at a bottom thereof on the low floor portions (157), put upright on the low floor portions, and contained in a cowling (114) for supporting the cowling.

4. A motorcycle as set forth in claim 3, further comprising:
a combination switch (149) disposed, in a side view, near an edge of the side opening (159) and in the vicinity of a head pipe (121); and
a harness (166) extended from the combination switch to a rear combination lamp (135) and routed through a space between the cowling (114) and the luggage compartment (150) and/or a cable (148) extended from the combination switch to a seat lock mechanism (147) and routed through a space between the cowling and the luggage compartment.

## Patentansprüche

1. Motorrad umfassend:
einen Rahmen (40) mit Vorder- und Hinterrad (11, 17),
eine Verkleidung (14), die einen wesentlichen Teil des Rahmens abdeckt,
ein Gepäckfach (28), das innerhalb der Verkleidung zwischen dem Vorder- und Hinterrad angeordnet ist, und
mindestens einen öffnenden/schließenden Verschlußdeckel (27), der an der Seite der Verkleidung vorgesehen ist, um Gepäck (35) von der Seite in das und aus dem Gepäckfach zu räumen,
**dadurch gekennzeichnet, daß** das Gepäckfach eine hintere Öffnung (34) besitzt, die an einem hinteren Teil desselben angeordnet ist, wobei die hintere Öffnung so ausgestaltet ist, daß sie durch einen Sitz (15) zum Sitzen eines Benutzers (174) geschlossen und durch Öffnen des Sitzes in einen geöffneten Zustand gebracht werden kann.

2. Motorrad umfassend:
Niederflurabschnitte (157), die es einem Benutzer (174) erlauben, seine Beine darauf abzustellen, wenn das Motorrad gefahren wird,
einen Niederflurrahmen (120), der die Niederflurabschnitte stützt,
ein Gepäckfach (150), das auf dem Niederflurrahmen ausgebildet ist,
eine Seitenöffnung (159), die an einer Seite des Gepäckfachs ausgebildet ist,
einen öffenenden/schließenden Verschlußdeckel (160) zum Schließen der Seitenöffnung,
ein Befestigungselement (172) zum Befestigen eines ersten Endes des öffnenden/schließenden Verschlußdeckels an einer Karosseriekomponente (114) und
ein Schloß (173), das an einem zweiten Ende des öffnenden/schließenden Verschlußdeckels an einer Stelle ausgebildet ist, wo ein Benutzer, der das Motorrad fährt, den Verschlußdeckel mit seinem Bein (175) halten kann, zur Befestigung des zweiten Endes an der Karosseriekomponente,
**dadurch gekennzeichnet, daß** das Gepäckfach eine hintere Öffnung (176) aufweist, die an einem hinteren Teil desselben angeordnet ist, wobei die hintere Öffnung so ausgestaltet ist, daß sie durch einen Sitz (115) zum Sitzen eines Benutzers (174) geschlossen werden kann und durch Öffnen des Sitzes in einen geöffneten Zustand gebracht werden kann.

3. Motorrad nach Anspruch 2, bei dem das Gepäckfach (150) an einem Boden desselben an den Niederflurabschnitten (157) aufrecht stehend auf den Niederflurabschnitten befestigt und in einer Verkleidung (114) zum Stützen der Verkleidung enthalten ist.

4. Motorrad nach Anspruch 3, ferner umfassend:
einen Kombinationsschalter (149), der seitlich gesehen nahe eines Randes der Seitenöffnung (159) und in der Nähe eines Lenkrohres (121) angeordnet ist, und
einen Kabelbaum (166), der sich von dem Kombinationsschalter zu einer hinteren Kombinationsleuchte (135) erstreckt und durch einen Raum zwischen der Verkleidung (114) und dem Gepäckfach (150) geführt ist, und/oder ein Kabel (148), das sich von dem Kombinationsschalter zu einem Sitzschließmechanismus (147) erstreckt und durch einen Raum zwischen der Verkleidung und dem Gepäckfach geführt ist.

## Revendications

1. Moto comportant :
un châssis (40) avec des roues avant et arrière (11, 17) ;
un carénage (14) recouvrant la majeure partie du châssis ;
un compartiment à bagages (28) disposé à l'intérieur du carénage entre les roues avant et arrière ; et
au moins un capot d'ouverture/fermeture (27) prévu sur un côté du carénage afin de mettre des bagages (35) dans et hors du compartiment à bagages par le côté,
**caractérisée en ce que** le compartiment à bagages a une ouverture arrière (34) prévue au niveau de sa partie arrière, l'ouverture arrière étant conçue de telle sorte qu'elle peut être fermée par un siège (15) pour qu'un opérateur (174) s'assoie dessus et être amenée dans un état ouvert en ouvrant le siège.

2. Moto comportant :
des parties de plancher inférieur (157) destinées à permettre à un opérateur (174) de reposer ses jambes dessus lorsqu'il pilote la moto ;
un cadre de plancher inférieur (120) destiné à supporter les parties de plancher inférieur ;
un compartiment à bagages (150) prévu sur le cadre de plancher inférieur ;
une ouverture latérale (159) prévue sur un côté du compartiment à bagages ;
un capot d'ouverture/fermeture (160) destiné à fermer l'ouverture latérale ;
un élément de fixation (172) destiné à fixer une première extrémité du capot d'ouverture/fermeture sur un composant de corps (114) ; et
une serrure (173) prévue au niveau d'une deuxième extrémité du capot d'ouverture/fermeture dans un emplacement où un opérateur qui pilote la moto peut tenir le capot avec sa jambe (175), afin de fixer la deuxième extrémité sur le composant de corps,
**caractérisée en ce que** le compartiment à bagages a une ouverture arrière (176) prévue au niveau de sa partie arrière, et l'ouverture arrière est conçue de telle sorte qu'elle peut être fermée par un siège (115) pour qu'un opérateur (174) s'assoie dessus et être amenée dans un état ouvert en ouvrant le siège.

3. Moto selon la revendication 2, dans laquelle le compartiment à bagages (150) est fixé au niveau d'un fond de celle-ci, sur les parties de plancher inférieur (157), placé verticalement sur les parties de plancher inférieur, et contenu dans un carénage (114) afin de supporter le carénage.

4. Moto selon la revendication 3, comprenant en outre :
un commutateur combiné (149) disposé, en vue de côté, près d'un bord de l'ouverture latérale (159) et à proximité d'un tube de tête (121) ; et
un harnais (166) s'étendant depuis le commutateur combiné jusqu'à un feu combiné arrière (135) et passé à travers un espace entre le carénage (114) et le compartiment à bagages (150) et/ou un câble (148) s'étendant depuis le commutateur de combinaison jusqu'à un mécanisme de serrure de siège (147) et passé à travers un espace entre le carénage et le compartiment à bagages.
